# EUROPEAN PATENT SPECIFICATION

(11) **EP 3 361 567 B1**
(45) Date of publication and mention of the grant of the patent: **26.08.2020**
(21) Application number: 15907014.3
(22) Date of filing: 30.10.2015
(51) Int. Cl.: H01Q 1/48, H01Q 3/44, H01Q 21/24, H01Q 1/24, H01Q 19/10, H01Q 21/00, H01Q 21/26, H01Q 3/32, H01Q 1/36

(54) **ANTENNA SYSTEM**
ANTENNENSYSTEM
SYSTÈME D'ANTENNE

(43) Date of publication of application: 15.08.2018
(73) Proprietor: Huawei Technologies Co., Ltd., Longgang District Shenzhen, Guangdong 518129 (CN)
(72) Inventor: XIAO, Weihong, Shenzhen, Guangdong 518129 (CN); LIAO, Zhiqiang, Shenzhen, Guangdong 518129 (CN)
(74) Representative: Thun, Clemens
(86) International application number: PCT/CN2015/093455
(87) International publication number: WO 2017/070952

(56) References cited:
- CN-A- 1 985 404
- CN-A- 102 013 551
- CN-A- 103 066 381
- CN-A- 103 682 597
- US-A- 4 218 685
- US-A1- 2010 134 374
- US-A1- 2011 285 474
- US-A1- 2012 098 725
- US-A1- 2015 042 531
- US-B2- 7 053 852

## Description

### TECHNICAL FIELD

The present invention relates to the field of communications technologies, and in particular, to an antenna system.

### BACKGROUND

Currently, a radome in a conventional base station antenna design system mainly includes three parts: a radiation array unit, a reflection panel used to define a direction, and a feeding system that is mounted on the reflection panel and provides an amplitude and a phase for the radiation array unit. The reflection panel is generally used as a carrier platform, and both the radiation array unit and the feeding network are connected to and mounted on the reflection panel.

For an antenna applied to a higher-order Multi Input Multi Output technical scenario, the conventional antenna structure form has a relatively complex structure design and requires more assembly hours, and an error is easily caused because many assembly components exist; therefore, consistency is also affected.

An existing design scheme provides a feeding system that includes an air microstrip, and in the feeding system, a reflection panel is used as a ground plane, which simplifies design to some extent. However, the air microstrip in this design scheme has obvious defects, that is, backward radiation is large, a voltage standing wave ratio is not stable, and being greater than a frequency band of 2GHz; higher requirements are imposed on production and assembly, and therefore, the air microstrip is difficult to use. US 2015/0042531 A1 and US 2012/0098725 A1 disclose that antenna elements are grounded to a wall of cavity.

### SUMMARY

This application provides an antenna system, to simplify assembly of the antenna system and improve stability and consistency of the antenna system.

The present invention is defined in the appended independent claims. Further implementations are disclosed in the appended dependent claims.

According to a first aspect, an antenna system is provided, and the antenna system includes:
a radiating element, a strip line that has a hollow cavity, and two inner conductors disposed in the hollow cavity, as defined in claim 1.

With reference to the foregoing first aspect, in a first possible implementation manner, a dielectric combination is disposed on one of the two inner conductors, the dielectric combination being slidable against said one of the two inner conductors, and when the dielectric combination slides against the inner conductor, a transmission phase of the inner conductor can be changed, so that an offset of a maximum direction of a radiation pattern of the antenna system is caused, so as to better serve mobile communications.

With reference to the foregoing first aspect or the first possible implementation manner of the first aspect, in a second possible implementation manner, the hollow cavity is a hollow cavity structure with openings at two ends.

With reference to the foregoing first aspect or the first possible implementation manner of the first aspect, in a third possible implementation manner, the strip line ground plane is a strip line ground plane made by metallic materials that reflect radiation waves, and no independent reflective surface needs to be disposed because the strip line ground plane can be used as a reflective surface of the radiating element; therefore, a structure of the antenna system is simplified.

With reference to the foregoing third possible implementation manner of the first aspect, in a fourth possible implementation manner, a surface, of the strip line ground plane, that faces the radiating element is a flat surface or a convex arc surface.

With reference to the foregoing first aspect, the first possible implementation manner of the first aspect, the second possible implementation manner of the first aspect, the third possible implementation manner of the first aspect, or the fourth possible implementation manner of the first aspect, in a fifth possible implementation manner, a separator is disposed in the hollow cavity, the separator divides the hollow cavity into two side-by-side cavities, and the two inner conductors are located in the two cavities respectively.

With reference to the foregoing first aspect, the first possible implementation manner of the first aspect, the second possible implementation manner of the first aspect, the third possible implementation manner of the first aspect, the fourth possible implementation manner of the first aspect, or the fifth possible implementation manner of the first aspect, in a sixth possible implementation manner, the radiating element is arranged in at least two rows, and each row of radiating elements is corresponding to one strip line.

With reference to the foregoing sixth possible implementation manner of the first aspect, in a seventh possible implementation manner, multiple strip lines are of an integrated structure.

With reference to the foregoing first aspect, the first possible implementation manner of the first aspect, the second possible implementation manner of the first aspect, the third possible implementation manner of the first aspect, the fourth possible implementation manner of the first aspect, the fifth possible implementation manner of the first aspect, the sixth possible implementation manner of the first aspect, or the seventh possible implementation manner of the first aspect, in an eighth possible implementation manner, the antenna system further includes a radome, where the radome covers the strip line and the radiating element.

A strip line ground plane is used as a reflective surface of a radiating element, and therefore, no independent reflective surface needs to be disposed, so that a structure of an antenna system is simplified. In addition, radiation baluns are electrically connected to the strip line ground plane, and all of feeding inner cores of radiation arms that are in a same polarization direction in the radiating element are electrically connected to one inner conductor, that is, a strip line of a strip line feeding system feeds the radiation arms in the same polarization direction one by one. Therefore, a feeding manner of an array antenna can be optimized very conveniently, assembly time is greatly reduced, quantities of welding points and cables are reduced, and because of reduced quantities of welding points and cables, consistency and reliability of the antenna system are improved.

### BRIEF DESCRIPTION OF DRAWINGS

FIG. 1 is a schematic diagram of a side cross section of a connection between a radiating element and a strip line in an antenna system according to an example;
FIG. 2 is a schematic diagram of a side cross section of a connection between a radiating element and a strip line in an antenna system according to an embodiment of the present invention;
FIG. 3 is a cross-sectional view of a side structure of a connection between a radiating element and a strip line in an antenna system according to another embodiment of the present invention;
FIG. 4 is a schematic structural diagram of an antenna system according to an embodiment of the present invention;
FIG. 5 is a schematic diagram of a connection between an inner conductor of a microstrip and a feeding inner core in an antenna system according to an embodiment of the present invention;
FIG. 6 is a schematic diagram of a connection between a radiation balun and a strip line ground plane in an antenna system according to an embodiment of the present invention;
FIG. 7 is a schematic structural diagram of an antenna according to an embodiment of the present invention; and
FIG. 8 is a schematic structural diagram of a planar antenna according to another embodiment of the present invention.

Reference signs in the drawings:
00-radiating element, 00a-radiation arm, 00a1-first polarized radiation arm
00a2-second polarized radiation arm, 00b-feeding inner core, 00b1-first feeding inner core
00b2-second feeding inner core, OOc-radiation balun, 01-strip line, 01a-strip line ground plane
01a1-first strip line ground plane, 01a2-second strip line ground plane, 01b-inner conductor
01b1-first inner conductor, 01b2-second inner conductor, 01c-hollow cavity
01c1-first hollow cavity, 01c2-second hollow cavity, 21-strip line
201, 202, 203, ..., 20n-radiating elements, 201al-first polarized radiation arm
201a2-second polarized radiation arm, 201bl-first feeding inner core
201b2-second feeding inner core, 201d1 and 201d2-electrical connection points
201e-electrical connection point, 21b1-first inner conductor, 21b2-second inner conductor
21c1-first hollow cavity, 21c2-second hollow cavity, 02-radome

### DESCRIPTION OF EMBODIMENTS

The following describes specific embodiments of the present invention in detail with reference to accompanying drawings. It should be understood that the specific implementation manners described herein are merely used to describe and explain the present invention but are not intended to limit the present invention.

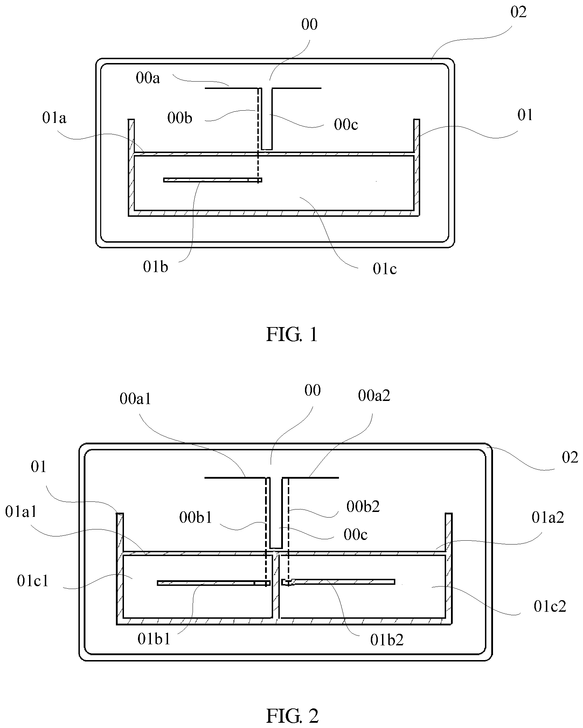

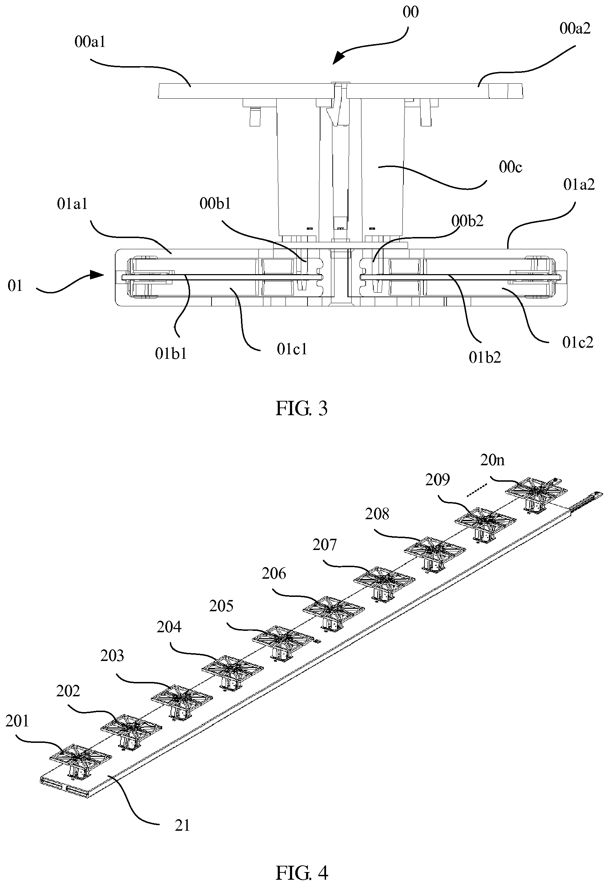

As shown in FIG. 1, FIG. 2, and FIG. 4, FIG. 1 is a schematic diagram of a side cross section of a connection between a radiating element and a strip line in an antenna system according to an example and embodiments of the present invention, FIG. 2 is a schematic diagram of a side cross section of a connection between a radiating element and a strip line in an antenna system according to an embodiment of the present invention, and FIG. 4 is a schematic structural diagram of an antenna system according to an embodiment of the present invention.

An embodiment of the present invention provides an antenna system, and the antenna system includes:
a radiating element 00, a strip line 01 that has a hollow cavity 01c, and an inner conductor 01b disposed in the hollow cavity 01c, where
the radiating element 00 includes: at least two radiation baluns 00c, radiation arms 00a that are in one-to-one correspondence with and are connected to the radiation baluns 00c, and feeding inner cores 00b that are in one-to-one correspondence with the radiation arms 00a; and
an upper wall of the strip line (01) is a strip line ground plane (01a), and the radiation baluns (00c) are fastened on the strip line ground plane 01a and are electrically connected to the strip line ground plane 01a; and radiation arms 00a that are in a same polarization direction in the radiating element 00 are corresponding to one inner conductor 01b, and the radiation arms 00a that are in the same polarization direction are electrically connected to the inner conductor 01b by using the corresponding feeding inner cores 00b.

In the foregoing embodiment, a strip line ground plane 01a is used as a reflective surface of a radiating element 00, and therefore, no independent reflective surface needs to be disposed, so that a structure of an antenna system is simplified. In addition, radiation baluns 00c are electrically connected to the strip line ground plane 01a, and all of feeding inner cores 00b of radiation arms 00a that are in a same polarization direction in the radiating element 00 are electrically connected to one inner conductor 01b, that is, a strip line 01 of a strip line feeding system feeds the radiation arms 00a in the same polarization direction one by one. Therefore, a feeding manner of an existing array antenna can be optimized very conveniently, and assembly time is greatly reduced. In a prior-art structure, feeding inner cores of each radiating element are corresponding to one inner conductor. By comparison, quantities of welding points and cables used to connect inner conductors are reduced, and therefore, consistency and reliability are improved.

To facilitate understanding of the embodiments of the present invention, the following describes in detail a structure of the antenna system with reference to specific embodiments.

As shown in FIG. 1 and FIG. 2, the antenna system provided in the embodiments may include a radome 02, where the radome 02 covers the strip line 01 and the radiating element 00.

The radiating element in the antenna system provided in the embodiments is a dual-polarization radiating element, and the following describes the radiating element in detail with reference to specific embodiments.

### Example 1

As shown in FIG. 1. FIG. 1 is a schematic diagram of a side cross section of a connection between a radiating element and a strip line, and in this example, the radiating element is a single-polarization radiating element.

Specifically, as shown in FIG. 1, a radiating element 00 includes radiation arms 00a in a same polarization direction, the radiation arm 00a is fastened on the top of a radiation balun 00c, and the radiation arm 00a is corresponding to a feeding inner core 00b that electrically feeds the radiation arm 00a, where the radiation arm 00a may be connected, in an electrical coupling manner or a welding manner, to the feeding inner core 00b corresponding to the radiation arm 00a for feeding. A strip line 01 has a hollow cavity 01c that is corresponding to the foregoing radiation arms 00a, and the strip line 01 has a strip line ground plane 01a that is corresponding to the radiation arms 00a in the same polarization direction. As shown in FIG. 1, the strip line ground plane 01a is an upper sidewall of the hollow cavity 01c. An inner conductor 01b is disposed in the hollow cavity 01c, and the inner conductor 01b is suspendedly disposed in the hollow cavity. In a specific connection, radiation baluns 00c of the radiating element 00 are electrically connected to the strip line ground plane 01a, and feeding inner cores 00b are electrically connected to the inner conductor 01b.

A surface, of the strip line ground plane 01a, that faces the radiating element 00 is used as a reflective surface, and is used to reflect a radiation wave transmitted by the radiating element 00. Therefore, a structure of an antenna system is simplified, and no reflective structure that is used to reflect a radiation wave needs to be disposed independently. In specific disposing, the surface, of the strip line ground plane 01a, that faces the radiating element 00 is a flat surface or a convex arc surface, and the strip line ground plane 01a is made by metallic materials.

In addition, the inner conductor 01b provided in an embodiment is of a PCB structure or a metal strip line structure. In this embodiment, as another optional solution, a dielectric combination that can slide against the inner conductor 01b is disposed on the inner conductor 01b. When the dielectric combination slides against the inner conductor 01b, a transmission phase of the inner conductor 01b may be changed, so that an offset of a maximum direction of a radiation pattern of the antenna system is caused, so as to better serve mobile communications.

In addition, the hollow cavity 01c of the strip line 01 provided in an embodiment is a hollow cavity 01c with openings at two ends. When the inner conductor 01b is being disposed, the inner conductor 01b may directly penetrate into the hollow cavity 01c through an opening of the hollow cavity 01c, thereby facilitating disposing of the inner conductor 01b and improving entire antenna production efficiency.

For the antenna system provided in an embodiment, the radiating element 00 and the strip line 01 are covered by a protective cover, and in specific disposing, the protective cover covers the radiating element 00 and the strip line 01.

In specific disposing, there may be multiple radiating elements 00, each radiation balun 00c is electrically connected to the strip line ground plane 01a, and each feeding inner core 00b is electrically connected to the inner conductor 01b. Specifically, the multiple radiating elements 00 are arranged in a single row, and an orientation of the radiating elements 00 that are arranged in a single row is the same as a length direction of the hollow cavity 01c, that is, the multiple radiating elements 00 are arranged along the length direction of the hollow cavity 01c to form a row of radiating elements.

### Embodiment 1

As shown in FIG. 2 and FIG. 3, an antenna in an antenna system provided in this embodiment is a dual-polarization antenna, that is, a radiating element 00 has radiation arms in two polarization directions, where FIG. 2 is a schematic diagram of a side cross section of the dual-polarization antenna, and FIG. 3 is a cross-sectional view of a side structure of the dual-polarization antenna.

In this embodiment, the radiating element 00 is a dual-polarization radiating element, and the dual-polarization radiating element includes a radiation arm whose polarization direction is positive 45 degrees and a radiation arm whose polarization direction is negative 45 degrees. Two inner conductors are disposed in a hollow cavity, the radiation arm whose polarization direction is positive 45 degrees is electrically connected to one inner conductor by using a feeding inner core to which the radiation arm whose polarization direction is positive 45 degrees is connected, and the radiation arm whose polarization direction is negative 45 degrees is electrically connected to the other inner conductor by using a feeding inner core to which the radiation arm whose polarization direction is negative 45 degrees is connected.

In a specific connection, the radiation arm whose polarization direction is positive 45 degrees is a first polarized radiation arm 00a1, and the radiation arm whose polarization direction is negative 45 degrees is a second polarized radiation arm 00a2, where the first polarized radiation arm 00a1 is corresponding to a first feeding inner core 00b1, and the second polarized radiation arm 00a2 is corresponding to a second feeding inner core 00b2. The foregoing radiation arms may be connected, in an electrical coupling manner or a welding manner, to the feeding inner cores corresponding to the radiation arms for feeding. The foregoing radiation balun 00c has a cavity, and the feeding inner cores 00b1 and 00b2 are disposed in the cavity of the radiation balun 00c. A separator is disposed in the hollow cavity of a strip line 01, the separator divides the hollow cavity into two side-by-side cavities, and the two inner conductors are located in the two cavities respectively. The foregoing two cavities are respectively a first hollow cavity 01c1 and a second hollow cavity 01c2. An upper sidewall of the first hollow cavity 01c1 is a first strip line ground plane 01a1, and a first inner conductor 01b1 is disposed in the first hollow cavity 01c1. An upper sidewall of the second hollow cavity 01c2 is a second strip line ground plane 01a2, and a second inner conductor 01b2 is disposed in the second hollow cavity 01c2. For a specific connection manner, reference may be made to a connection manner of the radiating element 00 and the strip line 01 in Example 1, that is, the first polarized radiation arm 00a1 is fastened on a radiation balun 00c, the radiation balun 00c is electrically connected to the first strip line ground plane 01a1, and the first feeding inner core 00b1 is electrically connected to the first inner conductor 01b1; the second polarized radiation arm 00a2 is fastened on a radiation balun 00c, the radiation balun 00c is electrically connected to the second strip line ground plane 01a2, and the second feeding inner core 00b2 is connected to the second inner conductor 01b2. In addition, in specific disposing, the first strip line ground plane 01a1 and the second strip line ground plane 01a2 may be of an integrated structure.

In this embodiment, the two hollow cavities divided by the separator are arranged side by side. For each hollow cavity, structures of the hollow cavity, an inner conductor 01b, and a strip line ground plane 01a are similar to structures in the foregoing Example 1, and details are not described herein. In addition, when the first strip line ground plane 01a1 and the second strip line ground plane 01a2 are of an integrated structure, a surface, of the strip line ground plane 01a in the integrated structure, that faces the radiating element 00 is used as a reflective surface, and a shape of the surface is an arc or a planform.

To facilitate understanding of the antenna system provided in this embodiment, the following describes in detail the antenna system with reference to accompany drawings.

As shown in FIG. 4, FIG. 4 shows a structure of a dual-polarization antenna system according to an embodiment. In FIG. 4, radiating elements in the antenna system are arranged in a single row, and the radiating elements are arranged along a length direction of a hollow cavity. The radiating elements included in the antenna system are 201, 202, 203, 204, 205, 206, 207, 208, 209, ..., 20n.

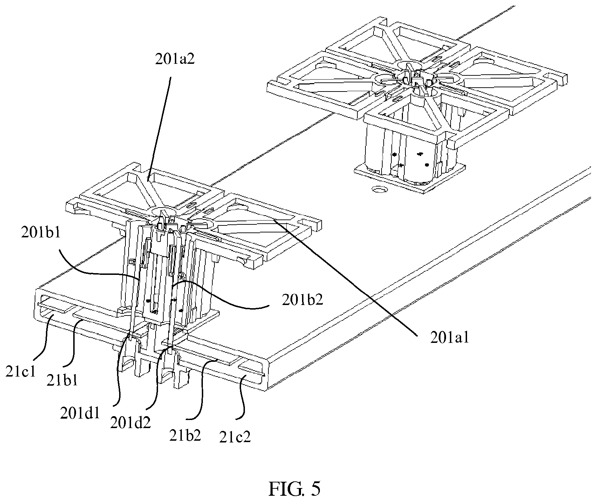

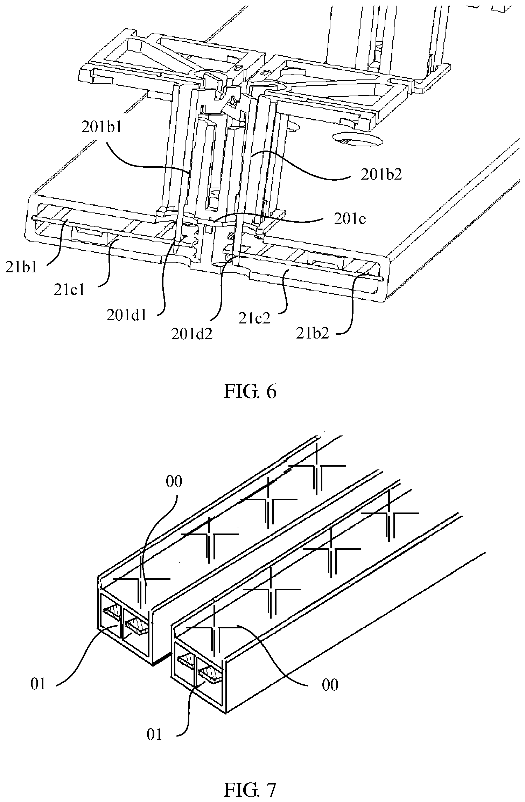

The radiating element 201 is used as an example; as shown in FIG. 5, the radiating element 201 includes a first polarized radiation arm 201a1 and a second polarized radiation arm 201a2. A first feeding inner core 201b1 of the radiating element 201 is connected to a first inner conductor 21b1 in a first hollow cavity 21c1 of a strip line 21, and an electrical connection point 201d1 between the first feeding inner core 201b1 and the first inner conductor 21b1 is shown in FIG. 5. A second feeding inner core 201b2 of the radiating element 201 is connected to a second inner conductor 21b2 in a second hollow cavity 21c2 of the strip line 21, and an electrical connection point 201d2 between the second feeding inner core 201b2 and the second inner conductor 21b2 is shown in FIG. 5. In the foregoing specific connection, the feeding inner cores are fixedly connected to the inner conductors by using a first connecting piece. In this embodiment, a connection is established by using a connecting piece, wherein the connecting piece is a bolt or a screw. An electrical connection point 201e between the radiation balun and the strip line ground plane is shown in FIG. 6. In this embodiment, the radiation balun is electrically connected to the strip line ground plane by using a second connecting piece, where the second connecting piece is a bolt or a screw. Electrical connection points that are not shown in FIG. 6 may further be 202e, ... 20ne, which are respectively and correspondingly used to electrically connect radiation baluns of radiation arms 201 to 20n and the strip line ground plane, and structures and connection manners of the electrical connection points are the same as those of the electrical connection point 201e of the radiating element 201.

In this embodiment, a separator is used to isolate the hollow cavity into two independent strip line cavities, so as to ensure that isolation indicators of two polarizations in a mobile communications system are met.

The antenna system shown in FIG. 4 is an integrated array antenna system, includes a radiation array that includes n radiation arms whose polarization directions are positive or negative 45 degrees, and includes two electrically isolated strip lines, that is, two electrically isolated hollow cavities and inner conductors.

To better explain working principles, a signal in one strip line feeds radiation arms 201a1, 202a1, 203a1, ..., 20na1 of radiating elements by using an inner conductor, and the radiation arms 201a1, 202a1, 203a1, ..., 20na1 of the radiating elements together form a radiator, of the array antenna, whose polarization direction is positive 45 degrees.

A signal in the other strip line feeds radiation arms 201a2, 202a2, 203a2, ..., 20na2 of the radiating elements by using an inner conductor, and the radiation arms 201a2, 202a2, 203a2, ..., 20na2 of the radiating elements together form a radiator, of the array antenna, whose polarization direction is negative 45 degrees.

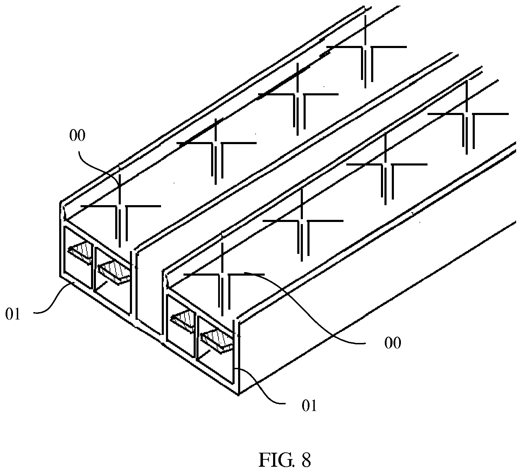

In specific disposing, there are multiple radiating elements, each radiation balun is electrically connected to a strip line ground plane, and each feeding inner core is electrically connected to an inner conductor. Specifically, the multiple radiating elements may be arranged in a single row, or arranged in an array manner, and an orientation of the single row of radiating elements is the same as a length direction of a hollow cavity. When strip lines are arranged in multiple columns, an antenna system is formed. Refer to FIG. 7 and FIG. 8 together, multiple strip lines may use independent structures, or use an integrated structure. As shown in FIG. 7, strip lines in FIG. 7 use independent structures, that is, strip lines of all columns of radiating elements are independent of each other. As shown in FIG. 8, strip lines corresponding to multiple columns of radiating elements in FIG. 8 are of an integrated structure, that is, strip lines corresponding to all columns of radiating elements are integrally connected.

The antenna system provided in all the embodiments of this application may be connected to a base station, and the base station receives information from a user or transmits information to a user by using the antenna system. The antenna system connects to and communicates with the base station by using a remote radio unit, and the base station may be a base transceiver station (Base Transceiver Station, "BTS" for short) in a Global System for Mobile Communications (Global System of Mobile communication, "GSM" for short) or Code Division Multiple Access (Code Division Multiple Access, "CDMA" for short) system, or may be a NodeB (NodeB, "NB" for short) in Wideband Code Division Multiple Access (Wideband Code Division Multiple Access, "WCDMA" for short), or may be an evolved NodeB (Evolutional Node B, "ENB" or "eNodeB" for short) in LTE; the base station may be a macro base station, or may be a small cell, which is not limited in the present invention. Obviously, a person skilled in the art can make various modifications and variations to the present invention without departing from the scope of the present invention. The present invention is intended to cover these modifications and variations provided that they fall within the scope of protection defined by the following claims.

## Claims

1. An antenna system, comprising:
a radiating element (00), a strip line (01) that has a hollow cavity (Olc), and two inner conductors (01b) disposed in the hollow cavity (01c), wherein
the radiating element (00) is a dual-polarization radiating element, comprising:
two radiation baluns (00c), a radiation arm whose polarization direction is positive 45 degrees and a radiation arm whose polarization direction is negative 45 degrees and
feeding inner cores (00b), wherein the radiation arms (00a) are in one-to-one correspondence with and are connected to the radiation baluns (00c) and the feeding inner cores (00b) are in one-to-one correspondence with the radiation arms (00a), and
wherein the radiation arm whose polarization direction is positive 45 degrees is electrically connected to one of the two inner conductors (Olbl) by a
corresponding connected feeding inner core (00b) and the radiation arm whose polarization direction is negative 45 degrees is electrically connected to the other one of the two inner 2. conductors (01b2) by a corresponding connected feeding inner core (00b); and
an upper wall of the strip line (01) is a strip line ground plane (Ola), and the radiation baluns (00c) are fastened on the strip line ground plane (Ola) and are electrically connected to the strip line ground plane (01a); and,
wherein the radiation baluns (00c) have cavities, and the feeding inner cores (00b) are disposed in the cavities of the radiation baluns (00c); the feeding inner cores (00b) are fixedly connected to the inner conductors (01b) by a first connecting piece; the radiation baluns (00c) are fixedly connected to the strip line ground plane (Ola) by
a second connecting piece (201e); both the first connecting piece and the second connecting piece (201e) are bolts or screws, the second connecting piece (201e) is set in the cavities of the radiation baluns (00c).

2. The antenna system according to claim 1, wherein a dielectric combination is disposed on one of the two inner conductors (01b), the dielectric combination being slidable against said one of the two inner conductors (01b).

3. The antenna system according to claim 1 or 2, wherein the hollow cavity (01c) is a hollow cavity structure with openings at two ends.

4. The antenna system according to claim 1 or 2, wherein the strip line ground plane (Ola) is a strip line ground plane made of metallic materials such that radiation waves are reflected.

5. The antenna system according to claim 4, wherein a surface, of the strip line ground plane (Ola), that faces the radiating element (00) is a flat surface or a convex arc surface.

6. The antenna system according to any one of claims 1 to 5, wherein a separator is disposed in the hollow cavity (01c), the separator divides the hollow cavity (01c) into two side-by-side cavities, and the two inner conductors (01b) are located in the two cavities respectively.

7. The antenna system according to any one of claims 1 to 6, wherein multiple radiating elements (00) are arranged in at least one row, and each row of radiating elements (00) is corresponding to one strip line (01).

8. The antenna system according to claim 7, wherein multiple strip lines (01) are of an integrated structure.

9. The antenna system according to any one of claims 1 to 8, further comprising:
a radome (02), wherein the radome (02) covers the strip line (01) and the radiating element (00).

## Patentansprüche

1. Antennensystem, Folgendes umfassend:
ein Strahlungselement (00), eine Streifenleitung (01), die einen Hohlraum (01c) aufweist, und zwei Innenleiter (01b), die im Hohlraum (01c) angeordnet sind,
wobei das Strahlungselement (00) ein Doppelpolarisations-Strahlungselement ist, Folgendes umfassend:
zwei Strahlungsbaluns (00c), einen Strahlungsarm, dessen Polarisationsrichtung 45 Grad positiv ist, und einen Strahlungsarm, dessen Polarisationsrichtung 45 Grad negativ ist, und speisende Innenkerne (00b), wobei die Strahlungsarme (00a) in einer Entsprechung eins zu eins mit den Strahlungsbaluns (00c) sind und mit diesen verbunden sind, und die speisenden Innenkerne (00b) in einer Entsprechung eins zu eins mit den Strahlungsarmen (00a) sind, und wobei der Strahlungsarm, dessen Polarisationsrichtung 45 Grad positiv ist, durch einen entsprechenden verbundenen speisenden Innenkern (00b) elektrisch mit einem der beiden Innenleiter (01b1) verbunden ist, und der Strahlungsarm, dessen Polarisationsrichtung 45 Grad negativ ist, durch einen entsprechenden speisender Innenkern (00b) elektrisch mit dem anderen der beiden Innenleiter (01b2) verbunden ist; und
eine obere Wand der Streifenleitung (01) eine Streifenleitungs-Massefläche (01a) ist, und die Strahlungsbaluns (00c) an der Streifenleitungs-Massefläche (01a) befestigt und elektrisch mit der Streifenleitungs-Massefläche (01a) verbunden sind; und
wobei die Strahlungsbaluns (00c) Hohlräume aufweisen und die speisenden Innenkerne (00b) in den Hohlräumen der Strahlungsbaluns (00c) angeordnet sind;
die speisenden Innenkerne (00b) durch ein erstes Verbindungsstück fest mit den Innenleitern (01b) verbunden sind;
die Strahlungsbaluns (00c) durch ein zweites Verbindungsstück (201e) fest mit der Streifenleitungs-Massefläche (01a) verbunden sind;
sowohl das erste Verbindungsstück als auch das zweite Verbindungsstück (201e) Bolzen oder Schrauben sind, das zweite Verbindungsstück (201e) in den Hohlräumen der Strahlungsbaluns (00c) eingesetzt ist.

2. Antennensystem nach Anspruch 1, wobei eine dielektrische Kombination auf einem der beiden Innenleiter (01b) angeordnet ist, wobei die dielektrische Kombination gegen den einen der beiden Innenleiter (01b) verschiebbar ist.

3. Antennensystem nach Anspruch 1 oder 2, wobei der Hohlraum (01c) eine hohle Hohlraumstruktur mit Öffnungen an beiden Enden ist.

4. Antennensystem nach Anspruch 1 oder 2, wobei die Streifenleitungs-Massefläche (01a) eine Streifenleitungs-Massefläche aus metallischen Materialien ist, sodass Strahlungswellen reflektiert werden.

5. Antennensystem nach Anspruch 4, wobei eine Oberfläche der Streifenleitungs-Massefläche (01a), die zum Strahlungselement (00) hin weist, eine ebene oder eine konvexe bogenförmige Oberfläche ist.

6. Antennensystem nach einem der Ansprüche 1 bis 5, wobei ein Trennelement in dem Hohlraum (01c) angeordnet ist, wobei das Trennelement den Hohlraum (01c) in zwei nebeneinanderliegende Hohlräume unterteilt und die beiden Innenleiter (01b) sich jeweils in den beiden Hohlräumen befinden.

7. Antennensystem nach einem der Ansprüche 1 bis 6, wobei mehrere Strahlungselemente (00) in mindestens einer Reihe angeordnet sind, und jede Reihe von Strahlungselementen (00) einer Streifenleitung (01) entspricht.

8. Antennensystem nach Anspruch 7, wobei mehrere Streifenleitungen (01) eine integrierte Struktur aufweisen.

9. Antennensystem nach einem der Ansprüche 1 bis 8, ferner Folgendes umfassend:
ein Radom (02), wobei das Radom (02) die Streifenleitung (01) und das Strahlungselement (00) abdeckt.

## Revendications

1. Système d'antenne, comprenant :
un élément rayonnant (00), une ligne de bande (01) qui a une cavité creuse (01c) et deux conducteurs internes (01b) disposés dans la cavité creuse (01c),
l'élément rayonnant (00) étant un élément rayonnant à double polarisation, comprenant :
deux symétriseurs à rayonnement (00c), un bras de rayonnement dont la direction de polarisation est positive de 45 degrés et un bras de rayonnement dont la direction de polarisation est négative de 45 degrés et des noyaux internes d'alimentation (00b), les bras de rayonnement (00a) étant en correspondance univoque avec les symétriseurs à rayonnement (00c) et les noyaux internes d'alimentation (00b) étant raccordés en correspondance univoque aux bras de rayonnement (00a), et le bras de rayonnement dont la direction de polarisation est positive de 45 degrés étant connecté électriquement à l'un des deux conducteurs internes (01b1) par un noyau interne d'alimentation raccordé correspondant (00b) et le bras de rayonnement dont la direction de polarisation est négative de 45 degrés étant connecté électriquement à l'autre des deux conducteurs internes (01b2) par un noyau interne d'alimentation raccordé correspondant (00b) ; et
une paroi supérieure de la ligne de bande (01) étant un plan de masse de ligne de bande (01a), et les symétriseurs de rayonnement (00c) étant fixés sur le plan de masse de ligne de bande (01a) et étant connectés électriquement au plan de masse de ligne de bande (01a) ; et,
les symétriseurs à rayonnement (00c) possédant des cavités, et les noyaux internes d'alimentation (00b) étant disposés dans les cavités des symétriseurs à rayonnement (00c) ; les noyaux internes d'alimentation (00b) étant raccordés de manière fixe aux conducteurs internes (01b) par une première pièce de raccordement ; les symétriseurs de rayonnement (00c) étant raccordés de manière fixe au plan de masse de la ligne de bande (01a) par une seconde pièce de raccordement (201e) ; la première pièce de raccordement et la seconde pièce de raccordement (201e) étant toutes deux des boulons ou des vis, la seconde pièce de raccordement (201e) étant placée dans les cavités des symétriseurs à rayonnement (00c).

2. Système d'antenne selon la revendication 1, dans lequel une combinaison diélectrique est disposée sur l'un des deux conducteurs internes (01b), la combinaison diélectrique pouvant coulisser contre ledit un des deux conducteurs internes (01b).

3. Système d'antenne selon la revendication 1 ou 2, dans lequel la cavité creuse (01c) est une structure à cavité creuse pourvue d'ouvertures à deux extrémités.

4. Système d'antenne selon la revendication 1 ou 2, dans lequel le plan de masse de ligne de bande (01a) est un plan de masse de ligne de bande constitué de matériaux métalliques de telle sorte que les ondes de rayonnement sont réfléchies.

5. Système d'antenne selon la revendication 4, dans lequel une surface du plan de masse de ligne de bande (01a), qui fait face à l'élément rayonnant (00) est une surface plane ou une surface convexe en arc.

6. Système d'antenne selon l'une quelconque des revendications 1 à 5, dans lequel un séparateur est disposé dans la cavité creuse (01c), le séparateur divise la cavité creuse (01c) en deux cavités côte à côte, et les deux les conducteurs internes (01b) sont situés respectivement dans les deux cavités.

7. Système d'antenne selon l'une quelconque des revendications 1 à 6, dans lequel multiples éléments rayonnants (00) sont disposés en au moins une rangée, et chaque rangée d'éléments rayonnants (00) correspond à une ligne de bande (01).

8. Système d'antenne selon la revendication 7, dans lequel multiples lignes de bande (01) sont d'une structure intégrée.

9. Procédé selon l'une quelconque des revendications 1 à 8, comprenant en outre :
un radôme (02), le radôme (02) couvrant la ligne de bande (01) et l'élément rayonnant (00).
